# EUROPÄISCHE PATENTSCHRIFT

(11) **EP 2 951 470 B1**
(45) Veröffentlichungstag und Bekanntmachung des Hinweises auf die Patenterteilung: **01.11.2017**
(21) Anmeldenummer: 14702191.9
(22) Anmeldetag: 29.01.2014
(51) Int. Cl.: F16H 61/472, F16H 59/16, B66D 1/08

(54) **HYDRAULIKSYSTEM**
HYDRAULIC SYSTEM
SYSTEME HYDRAULIQUE

(30) Priorität: 04.02.2013 DE 202013001173 U
(43) Veröffentlichungstag der Anmeldung: 09.12.2015
(73) Patentinhaber: Liebherr-Components Biberach GmbH, 88400 Biberach an der Riß (DE)
(72) Erfinder: HAUSLADEN, Norbert, 88400 Biberach an der Riß (DE); SCHINDLER, Viktor, 88524 Uttenweiler (DE); CHRIST, Clemens, 88400 Biberach an der Riß (DE)
(74) Vertreter: Thoma, Michael
(86) Internationale Anmeldenummer: PCT/EP2014/000240
(87) Internationale Veröffentlichungsnummer: WO 2014/117936

(56) Entgegenhaltungen:
- EP-A2- 1 277 991
- WO-A1-2006/100528
- CH-A5- 679 384
- US-A1- 2005 132 817
- US-A1- 2007 119 161

## Beschreibung

Die vorliegende Erfindung betrifft ein hydraulisches Wandler-, insbesondere Antriebssystem, mit zumindest einem Hydrostaten, der eine Antriebswelle umfasst, zumindest einer Erfassungseinrichtung zum Erfassen eines Betriebsparameters des Hydrostaten, sowie einer Steuer- und/oder Regelvorrichtung zum Steuern und/oder Regeln zumindest eines Systemparameters in Abhängigkeit des erfassten Betriebsparameters des Hydrostaten.

Ein hydraulisches Wandlersystem nach dem Oberbegriff des Anspruchs 1 ist beispielsweise aus der Schrift US 2005/0132817 A1 bekannt, die es vorschlägt, einen berührungslosen, magnetoelastischen Drehmomentsensor auf der Abtriebswelle eines Hydrostaten anzuordnen. Weitere Hydrostaten mit Drehmomentsensoren zeigen die Schriften CH 679384 A5, US 2007/119161 A1, WO 2006/100528 A1 oder EP 12 77 991 A2.

Bei Hydrostaten, die hydraulischen Druck in ein Drehmoment oder umgekehrt wandeln, ist es nicht ganz einfach, das an der Antriebswelle des Hydrostaten vorliegende Drehmoment exakt zu bestimmen. Werden Hydrostaten als Antriebsmotoren verwendet, werden üblicherweise der Hydraulikdruck, das Schluckvolumen und die Drehzahl an der Hydraulikeinheit gemessen. Anhand dieser Größen lässt sich der mechanische Wirkungsgrad aus einem Kennfeld bestimmen, womit dann das Drehmoment an der Antriebswelle berechnet werden kann. Von Nachteil ist dabei allerdings, dass das Wirkungsgrad-Kennfeld von Fertigungstoleranzen, dem Hydrauliköl, der Temperatur und der Viskosität und ggf. noch anderen Einflussgrößen abhängig ist. Das Wirkungsgrad-Kennfeld stimmt damit an sich immer nur für den Motor, an dem es gerade aktuell gemessen wurde. Zusätzlich verändert sich das Kennfeld auch mit zunehmender Lebenszeit des Motors, beispielsweise infolge von Verschleiß, auftretenden Druckverlusten etc.

Zur Bestimmung des genannten Wirkungsgrad-Kennfeldes wird bislang üblicherweise bei der Inbetriebnahme einer Anlage zusätzlich zu den genannten Messgrößen das jeweils an der Antriebswelle des Hydrostaten auftretenden Drehmoment exakt bestimmt, wobei hierfür eine Drehmomentmesswelle an die Hydraulikeinheit angebaut wird. Hierzu wird in der Regel ein zusätzliches Gehäuse zur Unterbringung der Referenz-Drehmomentmesswelle benötigt, was dazu führt, dass die Hydraulikeinheit nicht an ihrer bestimmungsgemäß vorgesehenen Position verbleiben kann.

Wird die Hydraulikeinheit beispielsweise als Antrieb einer Seilwinde eines Krans verwendet, wird üblicherweise für die Inbetriebnahme bzw. Abnahme des Systems die Seilwinde vom Hydraulikmotor bzw. dem damit verbundenen Antriebsgetriebe getrennt, um für die Referenzmessung den Hydromotor unter Zwischenschaltung der besagten Drehmomentmesswelle wieder an die Seilwinde anzubauen. Ein solches Prozedere ist natürlich mühevoll und aufwändig und löst überdies die vorgenannte Problematik sich ändernder Einflussgrößen nicht.

Es wurde auch bereits schon vorgeschlagen, die Eingangswelle am Hydrostatengetriebe mit Dehnungsmessstreifen zu applizieren und mit diesen die Drehmomentmessung durchzuführen. Hierzu muss aber ebenfalls das Getriebe speziell vorbereitet werden. Der Ausbau des Getriebes nach Durchführung der Messung gestaltet sich dann in bestimmten Anwendungen sehr aufwändig und schwierig, beispielsweise wenn ein Windengetriebe aus dem Maschinenhaus eines Krans wieder ausgebaut werden muss.

Der vorliegenden Erfindung liegt die Aufgabe zugrunde, ein verbessertes Hydrauliksystem, insbesondere Antriebssystem der genannten Art zu schaffen, das Nachteile des Standes der Technik vermeidet und Letzteren in vorteilhafter Weise weiterbildet. Vorzugsweise soll eine präzise Steuerung des Hydrauliksystems ermöglicht und der für das Einmessen des Systems erforderliche Montageaufwand reduziert werden.

Erfindungsgemäß wird die genannte Aufgabe durch ein hydraulisches System gemäß Anspruch 1 gelöst. Bevorzugte Ausgestaltungen der Erfindung sind Gegenstand der abhängigen Ansprüche.

Es wird vorgeschlagen, das Drehmoment des Hydrostaten nicht mehr mittelbar aus hydraulischen Messgrößen wie Hydraulikdruck, Schluckvolumen oder Drehzahl zu ermitteln und separate, vorübergehend anzubauende Sonder-Messvorrichtungen für Referenzmessungen anzubauen, sondern das Drehmoment direkt an der Antriebswelle des Hydrostaten zu messen. Erfindungsgemäß sind ein in den Hydrostaten integrierter, dessen Antriebswelle zugeordneter Drehmomentsensor zur Erfassung des Antriebswellendrehmoments des Hydrostaten und Steuermittel zum Steuern zumindest eines Systemparameters in Abhängigkeit des erfassten Antriebswellendrehmoments des Hydrostaten vorgesehen. Der integrierte Drehmomentsensor kann das Antriebswellendrehmoment des Hydrostaten zyklisch oder laufend auch während des bestimmungsgemäßen Betriebs des Hydrostaten messen, so dass das Stellsignal der Steuermittel jeweils aktuell auch während des Betriebs an Änderungen des gemessenen Drehmoments angepasst werden kann. Durch die dauerhafte Integration der Drehmomentsensorik auch für den bestimmungsgemäßen Dauerbetrieb kann auf separat anzubauende Referenz-Messbaugruppen verzichtet werden.

In Weiterbildung der Erfindung können die genannten Steuermittel einen Drehmoment-Regler zum Regeln des Hydrostatendrehmoments umfassen, der eine das Hydrostatendrehmoment beeinflussende Stellgröße in Abhängigkeit einer Differenz zwischen einem vorgebbaren Sollmoment und dem tatsächlichen Ist-Moment, d.h. dem vom Drehmomentsensor jeweils aktuell erfassten Antriebswellendrehmoment variiert. Durch eine solche Drehmomentregelung mit Hilfe des in den Hydrostaten integrierten Drehmomentsensors können gegenüber bisherigen Regelungen auftretende Ungenauigkeiten infolge von sich ändernden Einflussgrößen wie Viskosität, Temperatur, Alterungserscheinungen eliminiert werden bzw. zumindest stark gemildert werden.

In Weiterbildung der Erfindung kann der Hydrostat verstellbar ausgebildet sein und der genannte Regler als Stellgröße den Schwenkwinkel des Hydrostaten verstellen, um das vom Drehmomentsensor gemessene Ist-Drehmoment auf das vorgebbare Sollmoment einzuregeln.

Die der Erfindung zugrunde liegende Idee, eine Drehmoment-Messsensorik in die Hydraulikeinheit zu integrieren und mit dem von der integrierten Drehmoment-Messsensorik bereitgestellten Messsignal in die Steuerung bzw. Regelung einzugreifen, bringt beträchtliche Vorteile mit sich, nämlich unter anderem die folgenden:
- Unabhängig von Verlusten aller Art, die im Hydrostaten entstehen, kann der Hydrostat exakter gesteuert bzw. geregelt werden, weil volumetrische und mechanische Verluste von der Messung direkt an der Antriebswelle bereits berücksichtigt werden.
- Bei Systemen mit mehreren Hydrostaten kann ein genaueres Momentengleichgewicht aller am Betrieb beteiligten Hydrostaten eingestellten werden.
- Reibungs- und Planschverluste können in der Hydaulikeinheit sofort ausgeregelt werden.
- Bei Ausführung der Hydraulikeinheiten in sog. Dry-Case-Bauweise, d.h. Verwendung eines leeren Hydrostatengehäuses, um Schlepp- und Planschverluste zu verringern, kann Hydrauliköl direkt über eine Flanschverbindung zwischen Hydrostat und Getriebe ablaufen, weil kein zusätzlicher Drehmoment-Messwelleneinbau vorgesehen ist.
- Der Schaltkomfort eines die Hydraulikeinheit beinhaltenden Antriebsstrangs kann beträchtlich verbessert werden, da das Drehmoment der Hydraulikeinheiten exakter bestimmt und somit auch das Schluckvolumen bzw. Fördervolumen der Hydraulikeinheiten exakter eingestellt werden kann.
- Unabhängig von der Viskosität des Hydrauliköls können der Regelung exaktere Werte zur Verfügung gestellt werden, wobei der Einfluss der Ölsorte, der Ölqualität und der Temperatur auf die Viskosität eliminiert werden bzw. zumindest stark gemindert werden kann.
- Die mitrotierenden trägen Massen können reduziert werden, weil das Messsystem direkt der Motorwelle zugeordnet ist und keine zusätzlichen Drehmomentmesswellen oder dergleichen benötigt werden.
- Zusätzliche Reibungsverluste können vermieden werden, insbesondere durch einen berührungslosen Aufbau des Drehmomentmesssystems.
- Lastmomente, die auf die Hydraulikeinheit zurückwirken - beispielsweise beim Betrieb einer Seilwinde, bei Bremsen im Hydrostaten oder einem nachgeschalteten Bauteil - können sofort erfasst und damit das Anfahren aus dem Stillstand verbessert werden. Hierdurch stehen auch bei Systemausfall und einem Wiederanfahren, beispielsweise nach Abklemmen der Batterie, die aktuellen Lastmomente an der Antriebswelle sofort wieder zur Verfügung, da die Antriebswelle durch das Lastmoment eine Torsionsbelastung erfährt, was von dem Drehmomentsensor unmittelbar als elektrisches Signal an die Steuervorrichtung gemeldet werden kann. Dementsprechend kann ein notwendiger Hydraulikdruck vor dem Öffnen der Bremse in das System eingespeist und ein Nachregeln auf ein Minimum reduziert werden, da der einzustellende Druck lediglich noch vom Wirkungsgrad der Hydraulikeinheit abhängig ist.

Der in den Hydrostaten integrierte Drehmomentsensor kann hierbei an verschiedener Stelle positioniert bzw. der Antriebswelle des Hydrostaten zugeordnet werden. Dabei ist dem hydraulischen Wandler ein Getriebe nachgeschaltet bzw. zugeordnet, wobei der Drehmomentsensor im Inneren eines Getriebegehäuses, das an das Hydrostatgehäuse angeschlossen ist, untergebracht ist.

Erfindungsgemäß ist der Drehmomentsensor an einem Wellenstumpf des Hydrostaten angeordnet werden, der aus dem Hydrostat- bzw. Wandlergehäuse heraustritt und an ein Eingangselement des Hydrostatgetriebes drehfest angebaut ist. Beispielsweise kann der aus dem Wandlergehäuse herausragende Wellenstumpf der Hydrostat-Antriebswelle mit einem Getriebeeingangselement drehfest gekoppelt sein, wobei der Drehmomentsensor der Antriebswelle noch vor Anbindung des Getriebeeingangselements zugeordnet ist, insbesondere unmittelbar am Austritt der Antriebswelle aus der Stirnseite des Wandlergehäuses.

Der Drehmomentsensor kann hierbei nach verschiedenen Wirkprinzipien arbeiten. In Weiterbildung der Erfindung kann der Drehmomentsensor einen Torsionsmesser aufweisen, der die an der Antriebswelle auftretende Torsion misst. Die Torsion ist ein unmittelbarer Indikator für das an der Antriebswelle wirkende Drehmoment, da die Torsion unmittelbar vom Drehmoment abhängt.

In vorteilhafter Weiterbildung der Erfindung ist der Drehmomentsensor berührungslos arbeitend ausgebildet. Hierdurch können zusätzliche Reibungsverluste, die aus dem Messsystem resultieren, vermieden werden.

Vorteilhafterweise kann der Drehmomentsensor auf der Motorwelle sitzen bzw. die Motorwelle umfangsseitig zumindest abschnittsweise umgeben. Alternativ oder zusätzlich zu einem solchen auf der Antriebswelle des Hydrostaten angeordneten Messelement kann der Drehmomentsensor auch im Inneren der Antriebswelle angeordnet sein, wenn die Antriebswelle hohl ausgebildet ist bzw. einen entsprechenden Hohlraum besitzt.

Der Hydrostat kann in Weiterbildung der Erfindung ein Hydromotor sein, der Teil einer Antriebsvorrichtung und/oder eines Antriebsstrangs ist. Insbesondere kann der Hydrostat den Motor der Antriebseinheit einer Seilwinde einer Hubvorrichtung, insbesondere eines Krans bilden.

Grundsätzlich kann die integrierte Drehmomentmessung jedoch auch dann vorteilhaft sein, wenn der Hydrostat eine Pumpe bildet, die beispielsweise Teil eines Leistungsverzweigungsgetriebes sein kann. Hierbei kann die integrierte Drehmomentmessung beispielsweise hilfreich sein, um den über den hydraulischen Strang übertragene Leistung auf den über einen anderen Strang übertragenen Leistungsanteil anzupassen, insbesondere bei schnell ablaufenden Schaltvorgängen.

Die Antriebswelle, der der Drehmomentsensor zugeordnet ist, kann insbesondere eine Motorabtriebswelle oder ein Pumpeneingangswelle bilden.

Gemäß einem Aspekt der Erfindung kann der Hydrostat mit integriertem Drehmomentsensor den Motor einer Antriebseinheit eines hydraulischen Antriebssystems einer Seilwinde bilden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, teilweise geschnittene Seitenansicht einer Seilwinde mit einem hydraulischen Antriebssystem nach einer vorteilhaften Ausführung der Erfindung, wobei der Antriebswelle des Hydrostaten des Antriebssystems am Ausgang aus dem Hydrostatengehäuse ein Drehmomentsensor zugeordnet ist, dessen Drehmomentsignal zur Regelung des Hydrostaten verwendet wird,
- Fig. 2:: eine schematische, teilweise geschnittene Ansicht der Hydraulikeinheit des Antriebssystems aus Fig. 1 mit einer ausschnittsweise vergrößerten Darstellung des der Antriebswelle zugeordneten Drehmomentsensors, und
- Fig. 3:: eine schematische, teilweise geschnittene Darstellung einer Hydraulikeinheit ähnlich Fig. 2, wobei die Hydraulikeinheit in Dry-Case-Ausführung ausgebildet ist und einen Ölablauf der Hydraulikeinheit in das daran angeschlossene Getriebegehäuse vorsieht.

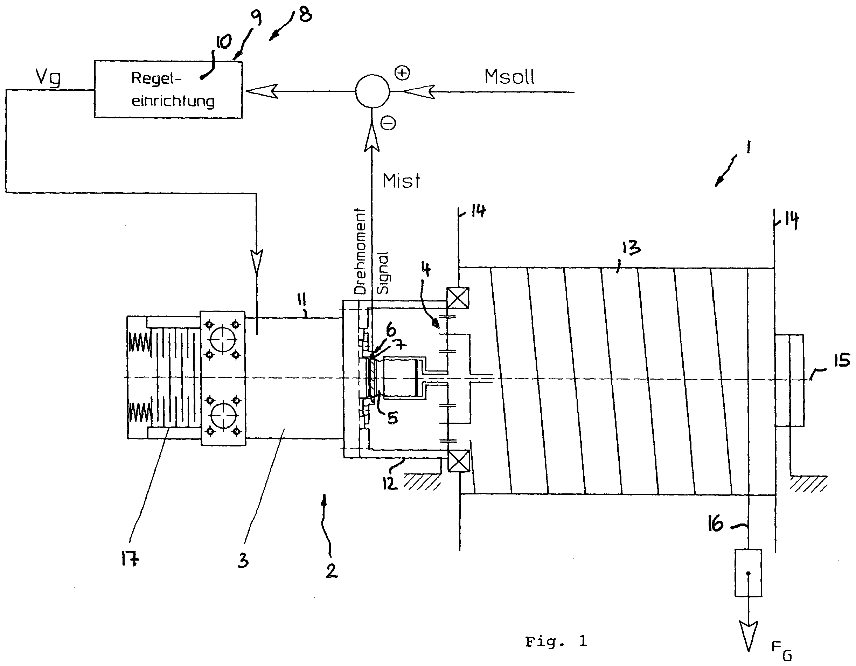

Wie Fig. 1 zeigt, kann das hydraulische Wandlersystem 2 das Antriebssystem einer Seilwinde 1 bilden, die beispielsweise an einem Kran wie einem Offshore-Kran oder anderen Kranen verwendet werden kann. Die Seilwinde 1 kann dabei eine im Wesentlichen zylindrische Trommel 13 umfassen, deren Trommelkorpus stirnseitig von Endscheiben 14 eingefasst ist, die sich im Wesentlichen senkrecht zur Längs- und Drehachse 15 der Seilwinde 1 erstrecken. Die Trommel 13 ist dabei in an sich bekannter Weise drehbar um die genannte Drehachse 15 gelagert, beispielsweise durch eine Drehlagerabstützung an seitlichen Lagerschilden.

Ein Hubseil 16 kann von der Seilwinde 1 auf- und abgespult werden, um eine Last zu heben und abzusenken, welche mit der Kraft F_{G} am Hubseil 16 zieht, vgl. Fig. 1.

Um die Seilwinde 1 antreiben zu können, ist an die Trommel 13 das hydraulische Antriebssystem 2 angeschlossen, wobei die Anbindung des Antriebssystems 2 in verschiedener Weise erfolgen kann, beispielsweise durch direkten Anschluss des Trommelkorpus oder ggf. auch über einen an der Endscheibe 14 vorgesehen Zahnkranz oder in anderer Weise.

Das Antriebssystem 2 umfasst einen als Hydromotor wirkenden Hydrostaten 3, der über ein Getriebe 4 beispielsweise in Form eines Planetengetriebes mit der Seiltrommel 13 verbunden ist, um die Seiltrommel 13 rotatorisch anzutreiben.

Um das Antriebssystem 2 bremsen bzw. blockieren zu können, kann eine Bremse 17 vorgesehen sein, die, wie Fig. 1 zeigt, an der dem Getriebe 4 abgewandten Stirnseite an den Hydrostaten 3 angebunden sein kann. In alternativer Weiterbildung der Erfindung könnte die Bremse 17 jedoch auch auf der Getriebeseite angeordnet und/oder dem Getriebe 4 zugeordnet sein.

Vorteilhafterweise ist die Bremse 17 einem Antriebselement des Antriebssystems 2 zugeordnet, an dem ein relativ geringes, vorzugsweise das geringste Drehmoment des Antriebsstrangs auftritt, beispielsweise kann die Bremse 17 auf die Antriebswelle 5 des Hydrostaten 3 einwirken. Wie Fig. 1 zeigt, kann die Bremse 17 beispielsweise als Lamellenbremse ausgebildet sein, die federvorgespannt in ihre bremsende Stellung ausgebildet und hydraulisch oder elektrisch lüftbar sein kann.

Der Hydrostat 3 kann vorteilhafterweise verstellbar ausgebildet sein, um das vom Hydrostaten bereitgestellte Drehmoment und seine Drehzahl einstellen zu können. Beispielsweise kann der Hydrostat 3 in an sich bekannter Weise einen Verstellhebel umfassen, mittels dessen das Schluckvolumen verstellt werden kann, beispielsweise durch Verstellung der Schrägscheibe.

Um das am Hydrostaten jeweils vorhandene Drehmoment zu bestimmten, ist in die Hydraulikeinheit umfassend den Hydrostaten 3 und das Getriebe 4 eine Erfassungseinrichtung 6 mit einem Drehmomentsensor 7 integriert, wobei der genannte Drehmomentsensor 7 im Inneren der Hydrostaten- und Getriebegehäuse 11 und 12 untergebracht ist. Dabei ist der genannte Drehmomentsensor 7 unmittelbar der Antriebswelle 5 des Hydrostaten 3 zugeordnet, die an ein Eingangselement des Getriebes 4 drehfest angebunden ist. In der in Fig. 1 gezeichneten Ausführung ist eine drehfeste Anbindung an das Sonnenrad der Planetenstufe des Getriebes 4 vorgesehen, wobei alternativ je nach gewünschter Getriebeausbildung und Übersetzungs- bzw. Untersetzungsverhältnis die Antriebswelle 4 an ein anderes Getriebeelement angebunden sein kann.

Der Drehmomentsensor 7 ist der genannten Antriebswelle 5 vor deren Anbindung an das Getriebe 7 zugeordnet, d.h. der Drehmomentsensor 7 liegt zwischen der Verbindung von Antriebswelle 5 und Getriebe 4 und dem Hydrostat 3 bzw. dem vom Getriebe 4 abgewandten Endbereich des Hydrostaten 3. Wie Fig. 1 zeigt, ist der Drehmomentsensor 7 dem Wellenstumpf der Antriebswelle 5 zugeordnet, welcher aus dem Hydrostatgehäuse 11 heraus- und in das daran angeschlossene Getriebegehäuse 12 hineinragt, insbesondere im Bereich der Schnittstelle zwischen Hydrostatgehäuse 11 und Getriebegehäuse 12, wobei der Drehmomentsensor 7 auf der Hydrostatseite angebracht ist.

Die in Fig. 1 gezeichnete Anbringung ist vorteilhaft hinsichtlich Zugänglichkeit und Montage und Präzision der Messung des vom Hydrostaten 3 bereitgestellten Drehmoments, da alle im Hydrostaten selbst auftretenden Verluste berücksichtigt sind bzw. unmittelbar das ausgangsseitig bereitgestellte Drehmoment gemessen wird.

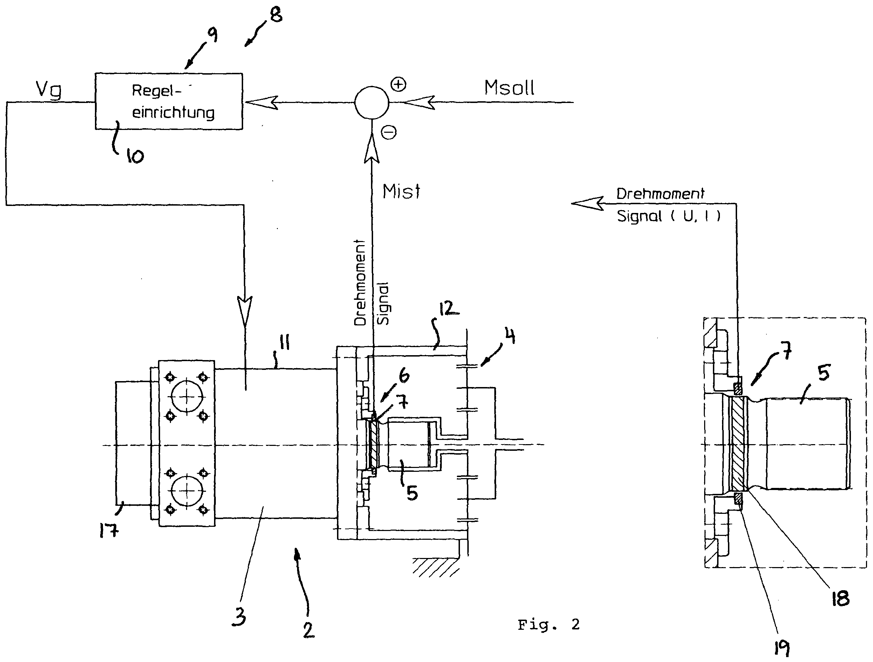

Wie Fig. 2 zeigt, kann der Drehmomentsensor 7 einen auf der Antriebswelle 5 sitzenden Torsionsmesser 18 umfassen, der mit einer umfangsseitig auf der Antriebswelle 5 sitzenden bzw. umfangsseitig hierzu angeordneten Aufnehmer 19 beispielsweise in Form einer Statorantenne zusammenwirkt.

Der in die Hydraulikeinheit integrierte Drehmomentsensor 7 stellt laufend im Betrieb ein Drehmomentsignal bereit, welches das aktuell tatsächlich am Hydrostaten 3 wirkende Drehmoment M_{Ist} angibt, vgl. Figuren 1 und 2. Das genannte Drehmomentsignal M_{Ist} kann insbesondere dazu verwendet werden, das Drehmoment des Hydrostaten 3 auf einen gewünschten Sollwert M_{Soll} einzuregeln. Hierzu wird das Drehmomentsignal des Drehmomentsensors 7 zusammen mit einem vorgebbaren - beispielsweise vom Maschinenführer über einen Wählhebel vorgebbaren - Sollmoment M_{Soll} in den Drehmomentregler 10 einer Steuervorrichtung 8 eingespeist, der in Abhängigkeit der jeweiligen Differenz zwischen gewünschtem Sollmoment M_{Soll} und dem tatsächlichen, aktuell gemessenen Ist-Moment M_{Ist} eine Stellgröße für den Hydrostaten 3 variiert und anpasst, um das Drehmoment des Hydrostaten 3 entsprechend einzuregeln. Das genannte Stellsignal V_{G} kann beispielsweise den Stellwinkel des Hydrostaten und damit sein Schluckvolumen, oder auch andere Betriebsparameter des Hydrostaten 3 variieren bzw. beeinflussen.

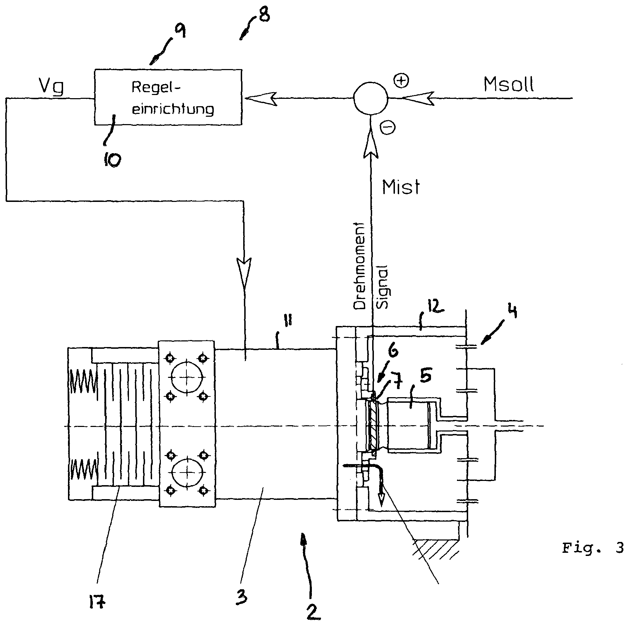

Fig. 3 zeigt eine der Fig. 2 grundsätzlich ähnliche Ausführung des hydraulischen Antriebssystems 2, wobei auch hier durch einen integrierten Drehmomentsensor 7 unmittelbar an der Antriebswelle 5 des Hydrostaten 3 dessen Drehmoment gemessen wird. Im Unterschied zu Fig. 2 ist der Hydrostat 3 in Dry-Case-Bauweise ausgeführt, wobei zur Vermeidung von Schlepp- und Planschverlusten ein leeres Hydrostatengehäuse 11 vorgesehen sein kann, wobei direkt über die Flanschverbindung zwischen Hydrostat 3 und Getriebe 4 das Hydrauliköl ablaufen kann, weil kein zusätzlicher Drehmomenten-Messwelleneinbau notwendig ist.

## Patentansprüche

1. Hydraulisches Wandler-, insbesondere Antriebssystem, mit zumindest einem Hydrostaten (3), der eine Antriebswelle (5) umfasst, zumindest einer Erfassungseinrichtung (6) zur Erfassung eines Betriebsparameters des Hydrostaten (3), sowie einer Steuer- und/oder Regelvorrichtung (8) zum Steuern und/ oder Regeln zumindest eines Systemparameters in Abhängigkeit des erfassten Betriebsparameters des Hydrostaten, wobei die Erfassungseinrichtung (6) einen in den Hydrostaten (3) integrierten, dessen Antriebswelle (5) zugeordneten Drehmomentsensor (7) zum Erfassen des Antriebswellen-Drehmoments des Hydrostaten (3) aufweist und die Steuer- und/oder Regelvorrichtung (8) Steuer- und/oder Regelmittel (9) zum Steuern und/oder Regeln des zumindest einen Systemparameters in Abhängigkeit des erfassten Antriebswellen-Drehmoments (M_{Ist}) aufweist, **dadurch gekennzeichnet, dass** der Drehmomentsensor (7) im Inneren eines Getriebegehäuses (12) eines an den Hydrostaten (3) angeschlossenen Hydrostatengetriebes (4) vorgesehen ist, wobei der Drehmomentsensor (7) an einem Wellenstumpf des Hydrostaten (3) sitzt, der aus einem Hydrostatengehäuse (11) heraustritt und an ein Eingangselement des Hydrostatengetriebes (4) drehfest angeschlossen ist.

2. Hydraulisches Wandlersystem nach dem vorhergehenden Anspruch, wobei die Steuer- und/oder Regelmittel (9) einen Drehmoment-Regler (10) zum Regeln des Hydrostaten-Drehmoments umfassen, der eine das Hydrostatendrehmoment beeinflussende Stellgröße (V_{g}) in Abhängigkeit einer Differenz zwischen einem vorgebbaren Sollmoment (M_{Soll}) und dem vom Drehmomentsensor (7) erfassten Antriebswellen-Drehmoment (M_{Ist}) variiert.

3. Hydraulisches Wandlersystem nach dem vorhergehenden Anspruch, wobei der Hydrostat (3) verstellbar ausgebildet ist und der Drehmoment-Regler (10) als Stellgröße den Schwenkwinkel des Hydrostaten verstellt.

4. Hydraulisches Wandlersystem nach einem der vorhergehenden Ansprüche, wobei der Drehmomentsensor (7) einen Torsionsmesser zum Messen der an der Antriebswelle (5) auftretenden Torsion aufweist.

5. Hydraulisches Wandlersystem nach einem der vorhergehenden Ansprüche, wobei der Drehmomentsensor (7) auf der Antriebswelle (5) sitzt oder im Inneren eines Hohlraums der Antriebswelle (5) aufgenommen ist.

6. Hydraulisches Wandlersystem nach einem der vorhergehenden Ansprüche, wobei der Drehmomentsensor (7) berührungslos arbeitend ausgebildet ist.

7. Hydraulisches Wandlersystem nach einem der vorhergehenden Ansprüche, wobei die Antriebswelle (5), der der Drehmomentsensor (7) zugeordnet ist, eine Motorabtriebswelle oder eine Pumpeneingangswelle bildet.

8. Hydraulisches Wandlersystem nach einem der vorhergehenden Ansprüche, wobei der Hydrostat (3) einen Hydromotor einer Antriebsvorrichtung und/oder eines Leistungsverzweigungsgetriebes bildet.

9. Seilwinde mit einem hydraulischen Wandlersystem gemäß einem der vorhergehenden Ansprüche 1-8.

10. Leistungsverzweigungsgetriebe mit einem hydraulischen Wandlersystem gemäß einem der Ansprüche 1-8.

## Claims

1. A hydraulic converter system, in particular a drive system, with at least one hydrostat (3), which includes a drive shaft (5), at least one detection device (6) for detecting an operating parameter of the hydrostat (3), as well as with a control and/or regulating device (8), for the controlling and/or regulating of at least one system parameter depending on the detected operating parameter of the hydrostatic transmission, wherein the detection device (6), includes a torque sensor (7) allocated to its drive shaft (5) and integrated into the hydrostatic transmission (3), and the control and/or regulating device (8) for detection of the drive shaft torque of the hydrostat (3) includes control and/or regulating means (9) for controlling and/or regulating of at least one system parameter depending on the detected drive shaft torque (M_{Ist}), **characterized in that** the torque sensor (7) is provided inside a transmission housing (12) of a hydrostatic drive shaft (4) connected to the hydrostat (3), wherein the torque sensor (7) sits on a shaft stump of the hydrostat (3), which protrudes out of a hydrostatic transmission housing (11) and is co-rotationally connected to an input element of the hydrostatic drive shaft (4).

2. Hydraulic converter system according to the preceding Claim, wherein the control and/or regulating means (9) include a torque controller (10) for the control of the hydrostatic torque, which varies a controlled variable (V_{g}) influencing the hydrostatic-torque according to a difference between a predeterminable desired torque (M_{Soll}) and the driveshaft torque (M_{Ist}) detected by the torque sensor (7).

3. Hydraulic converter system according to the preceding Claim, wherein the hydrostat (3) is designed to be adjustable, and the torque controller (10) as a controlled variable, adjusts the pivot angle of the hydrostatic transmission.

4. Hydraulic converter system according to one of the preceding Claims, wherein the torque sensor (7) includes a torsion meter for measuring the torsion occurring at the drive shaft (5).

5. Hydraulic converter system according to one of the preceding Claims, wherein the torque sensor (7) sits on the drive shaft (5), or is housed in the inside of a cavity of the drive shaft (5).

6. Hydraulic converter system according to one of the preceding Claims, wherein the torque sensor (7) is configured to work contact-free.

7. Hydraulic converter system according to one of the preceding Claims, wherein the drive shaft (5), which has the torque sensor (7) assigned thereto, forms a motor output shaft or a pump input shaft.

8. Hydraulic converter system according to one of the preceding Claims, wherein the hydrostat (3) forms a hydro motor of a drive device and/or a power split transmission.

9. Cable winch with a hydraulic converter system according to one of the preceding claims 1-8.

10. Power-split transmission with a hydraulic converter system according to one of the claims 1-8.

## Revendications

1. Système de convertisseur hydraulique, en particulier système d'entraînement, comportant au moins une unité hydrostatique (3) qui comprend un arbre d'entraînement (5), au moins un dispositif de détection (6) pour la détection d'un paramètre de fonctionnement de l'unité hydrostatique (3), ainsi qu'un dispositif de commande et/ou de réglage (8) destiné à la commande et/ou au réglage d'au moins un paramètre du système en fonction du paramètre de fonctionnement détecté pour l'unité hydrostatique (3), le dispositif de détection (6) présentant un capteur de couple (7) assigné à son arbre d'entraînement (5) intégré dans l'unité hydrostatique (3) pour la détection du couple de l'arbre d'entraînement de l'unité hydrostatique (3) et le dispositif de commande et/ou de réglage (8) présentant des moyens de commande et/ou de réglage (9) pour commander et/ou régler le au moins un paramètre de système en fonction du couple d'arbre d'entraînement détecté (M_{réel}), **caractérisé en ce que** le capteur de couple (7) est prévu à l'intérieur d'un boîtier de transmission (12) d'une transmission hydrostatique (4) reliée à l'unité hydrostatique (3), le capteur de couple (7) étant positionné sur un bout d'arbre de l'unité hydrostatique (3) qui sort d'un boîtier hydrostatique (11) et est relié de manière non rotative à un élément d'entrée de la transmission hydrostatique (4).

2. Système de convertisseur hydraulique selon la revendication précédente, dans lequel les moyens de commande et/ou de réglage (9) comprennent un régulateur de couple (10) pour le réglage du couple de l'unité hydrostatique, et qui modifie une variable (Vg) influençant le couple de l'unité hydrostatique en fonction d'une différence entre un couple de consigne (M_{consigne}) pouvant être prédéterminé et le couple d'arbre d'entraînement (M_{réel}) détecté par le capteur de couple (7).

3. Système de convertisseur hydraulique selon la revendication précédente, dans lequel l'unité hydrostatique (3) est agencée de manière à être ajustable et le régulateur de couple (10) règle l'angle de pivotement de l'unité hydrostatique comme valeur de réglage.

4. Système de convertisseur hydraulique selon l'une quelconque des revendications précédentes, dans lequel le capteur de couple (7) présente un torsiomètre pour mesurer la torsion qui se produit au niveau de l'arbre d'entraînement (5).

5. Système de convertisseur hydraulique selon l'une quelconque des revendications précédentes, dans lequel le capteur de couple (7) est positionné sur l'arbre d'entraînement (5) ou est logé à l'intérieur d'un espace creux de l'arbre d'entraînement (5).

6. Système de convertisseur hydraulique selon l'une quelconque des revendications précédentes, dans lequel le capteur de couple (7) est conçu pour fonctionner sans contact.

7. Système de convertisseur hydraulique selon l'une quelconque des revendications précédentes, dans lequel l'arbre d'entraînement (5) auquel est assigné le capteur de couple (7) forme un arbre de sortie du moteur ou un arbre d'entrée de la pompe.

8. Système de convertisseur hydraulique selon l'une quelconque des revendications précédentes, dans lequel l'unité hydrostatique (3) forme un hydromoteur d'un dispositif d'entraînement et/ou d'un entraînement à dérivation de puissance.

9. Treuil pourvu d'un système de convertisseur hydraulique selon l'une quelconque des revendications précédentes 1 à 8.

10. Entraînement à dérivation de puissance pourvu d'un système de convertisseur hydraulique selon l'une des revendications 1 à 8.
